# EUROPEAN PATENT APPLICATION

(11) **EP 3 926 217 A1**
(43) Date of publication of application: **22.12.2021**
(21) Application number: 20756436.0
(22) Date of filing: 16.01.2020
(51) Int. Cl.: F16J 12/00, F17C 1/06, B29C 70/54

(54) **PRESSURE VESSEL PRODUCTION METHOD AND PRESSURE VESSEL PRODUCTION DEVICE**

(30) Priority: 13.02.2019 JP 2019023772
(71) Applicant: Kabushiki Kaisha Toyota Jidoshokki, Kariya-shi, Aichi 448-8671 (JP)
(72) Inventor: HARADA Ryo, Kariya-shi, Aichi 448-8671 (JP); KAMIYA Ryuta, Kariya-shi, Aichi 448-8671 (JP)
(74) Representative: TBK
(86) International application number: PCT/JP2020/001214
(87) International publication number: WO 2020/166265

(57) **Abstract**

This high-pressure tank production method includes a heat-curing step wherein a thermosetting resin (57) before being cured, with which a fiber reinforced base material (19) has been impregnated, is heat-cured, and the step comprises heat-curing the thermosetting resin (57) before being cured through heat exchange with hot water (W) supplied to the interior of a liner (12) and also heat-curing the thermosetting resin (57) before being cured through heating from the external surface side of the fiver reinforced base material (19) by means of a forming mold (31). The temperature of the hot water (W) supplied to the interior of the liner (12) is set to be higher than the temperature of the heating performed from the external surface of the fiber reinforced base material (19) by means of the forming mold (31).

## Description

### TECHNICAL FIELD

The present invention relates to a method for manufacturing a pressure container including a liner externally covered with a fiber-reinforced composite layer that is formed by thermally curing a thermosetting resin with which a fiber-reinforced base material made from reinforced fibers is impregnated, and a manufacturing apparatus for manufacturing the pressure container.

### BACKGROUND ART

In recent years, automobiles that use natural gas as fuel have attracted attention as low-emission vehicles, and automobiles that use fuel cells as a power source have also attracted attention as lower-emission vehicles. Although hydrogen gas that serves as fuel of the fuel cells is accommodated in a fuel tank in some of the automobiles, a pressure container that serves as the fuel tank is heavy, which results in lower fuel economy. In order to solve this problem, such a pressure container includes a gas-permeable liner (an inner shell) covered with a fiber-reinforced composite layer that is resistant to pressure. Such a pressure container is filled with the gas so that the pressure in the container is tens of megapascal, but the liner is reinforced by the fiber-reinforced composite layer.

Such a pressure container may be manufactured by Resin Transfer Molding (RTM) (for example, see Patent Document 1). In this molding, the liner covered with the fiber-reinforced base material is placed in a cavity in a forming mold. The fiber-reinforced base material externally covering the liner is impregnated with a thermosetting resin, and the thermosetting resin is then thermally cured by the heating with the forming mold to form the fiber-reinforced composite layer that covers the liner.

Alternatively, for example, as described in Patent Document 2, the liner is externally wound with fibers impregnated with a thermosetting resin by filament winding method to form the fiber-reinforced base material that externally covers the liner. The liner covered with the fiber-reinforced base material is placed in an oven, and the thermosetting resin is thermally cured in the oven to form the fiber-reinforced composite layer that covers the liner.

### Citation List

### Patent Document

Patent Document 1: Japanese Patent Application Publication No. 2013-209510
Patent Document 2: Japanese Patent Application Publication No. 2015-59123

### SUMMARY OF INVENTION

### Technical Problem

While the thermosetting resin is thermally cured, an inner surface of the fiber-reinforced composite layer may be distorted by curing. The distortion of the inner surface of the fiber-reinforced composite layer may decrease the reinforcement performance of the fiber-reinforced composite layer, thereby preventing the pressure container from achieving strength unfavorably.

It is an object of the present invention to provide a method for manufacturing a pressure container that is capable of suppressing a decrease in the strength of the pressure container, and a manufacturing apparatus for manufacturing the pressure container.

### Solution to Problem

A method for manufacturing a pressure container to solve the aforementioned problem is a method for manufacturing a pressure container, comprising: thermally curing a thermosetting resin with which a fiber-reinforced base material made from reinforced fibers is impregnated to form a fiber-reinforced composite layer that externally covers a liner, wherein the thermally curing step for thermally curing the thermosetting resin with which the fiber-reinforced base material is impregnated includes thermally curing the thermosetting resin by heat exchange with a fluid supplied to an inside of the liner; and thermally curing the thermosetting resin by heating from an outer surface side of the fiber-reinforced base material, and a temperature of the fluid supplied to the inside of the liner is higher than a temperature of the heating from the outer surface side of the fiber-reinforced base material.

According to this configuration, in the thermal curing step, the temperature of the fluid supplied to the inside of the liner is adjusted to be higher than the heating temperature to heat the thermosetting resin from the outer surface side of the fiber-reinforced base material. Accordingly, the thermosetting resin in the fiber-reinforced base material is thermally cured from an inner surface side of the fiber-reinforced base material, which is adjacent to the liner, before thermally cured from the outer surface side of the fiber-reinforced base material. This suppresses an inner surface of the fiber-reinforced composite layer from being distorted by curing, thereby allowing the fiber-reinforced composite layer to deliver reinforcement performance. This therefore allows the fiber-reinforced composite layer to suitably receive a load when the liner receives the internal pressure, thereby suppressing a decrease in the strength of the pressure container.

Regarding the method for manufacturing the pressure container, the liner covered with the fiber-reinforced base material may be placed in a cavity of a forming mold, and the heating from the outer surface side of the fiber-reinforced base material may be heating with the forming mold.

This configuration allows an inner surface of the forming mold, which defines the cavity, to be located in contact with or close to the fiber-reinforced base material when the forming mold is closed. Accordingly, the thermosetting resin easily receives the heat of the forming mold and is thermally cured efficiently.

Regarding the method for manufacturing the pressure container, the method may include impregnating the fiber-reinforced base material with the thermosetting resin that is supplied to the cavity before the thermal curing step, and in the impregnation step, the thermosetting resin may be heated by heat exchange with the fluid supplied to the inside of the liner.

According to this, in the impregnation step, the temperature of the fluid supplied to the inside of the liner is adjusted to heat the thermosetting resin, which suppresses the thermosetting resin from being cooled to prevent an increase in the viscosity of the thermosetting resin during the impregnation of the fiber-reinforced base material with the thermosetting resin. Therefore, the impregnation of the fiber-reinforced base material with the thermosetting resin proceeds smoothly, which leads to reduction in time required for the impregnation.

Regarding the method for manufacturing the pressure container, the method may include cooling the pressure container that is manufactured by thermally curing the thermosetting resin, and in the cooling step, the temperature of the fluid supplied to the inside of the liner may be adjusted to a temperature lower than a temperature of the forming mold.

The cooling step allows forced cooling of the pressure container that has been heated for thermally curing the thermosetting resin, thereby reducing the time required for manufacturing the pressure container, for example, as compared with a case where the pressure container is naturally cooled.

A manufacturing apparatus for manufacturing a pressure container to solve the aforementioned problem is a manufacturing apparatus for manufacturing a pressure container, the pressure container including a liner externally covered with a fiber-reinforced composite layer that is formed by thermally curing a thermosetting resin with which a fiber-reinforced base material made from reinforced fibers is impregnated, the manufacturing apparatus comprising: a fluid supplier configured to supply a fluid to an inside of the liner; a heater configured to heat the thermosetting resin from an outer surface side of the fiber-reinforced base material, and a temperature controller configured to adjust a temperature of the fluid supplied to the inside of the liner to a temperature higher than a heating temperature of the heater when the thermosetting resin with which the fiber-reinforced base material is impregnated is thermally cured.

According to this configuration, the temperature controller adjusts the temperature of the fluid supplied to the inside of the liner to a temperature higher than the heating temperature of the heater to heat the thermosetting resin when the thermosetting resin is thermally cured. Accordingly, the thermosetting resin in the fiber-reinforced base material is thermally cured from an inner surface side of the fiber-reinforced base material, which is adjacent to the liner, before thermally cured from the outer surface side of the fiber-reinforced base material. This suppresses an inner surface of the fiber-reinforced composite layer from being distorted by curing, thereby allowing the fiber-reinforced composite layer to deliver reinforcement performance. This therefore allows the fiber-reinforced composite layer to suitably receive a load when the liner receives the internal pressure, thereby suppressing a decrease in the strength of the pressure container.

The manufacturing apparatus for manufacturing the pressure container may include a forming mold that has a cavity in which the liner covered with the fiber-reinforced base material is placed, wherein the forming mold serves as the heater and has an inflow passage through which the fluid supplier communicates with the cavity, and the temperature controller adjusts the temperature of the fluid supplied to the inside of the liner to a temperature for heating the thermosetting resin when the fiber-reinforced base material is impregnated with the thermosetting resin supplied to the cavity before the thermally curing.

According to this, the temperature controller adjusts the temperature of the fluid supplied to the inside of the liner to heat the thermosetting resin when the fiber-reinforced base material is impregnated with the thermosetting resin, so that the thermosetting resin is suppressed from being cooled to prevent an increase in the viscosity of the thermosetting resin during the impregnation of the fiber-reinforced base material with the thermosetting resin. Therefore, the impregnation of the fiber-reinforced base material with the thermosetting resin proceeds smoothly, which leads to reduction in time required for the impregnation.

Regarding the manufacturing apparatus for manufacturing the pressure container, the temperature controller may adjust the temperature of the fluid supplied to the inside of the liner to a temperature lower than a temperature of the forming mold before the pressure container manufactured by thermally curing the thermosetting resin is removed from the forming mold.

This allows forced cooling of the pressure container that has been heated for thermally curing the thermosetting resin, thereby reducing the time required for manufacturing the pressure container, for example, as compared with a case where the pressure container is naturally cooled.

### Advantageous Effects of Invention

The present invention suppresses a decrease in the strength of the pressure container.

### BRIEF DESCRIPTION OF DRAWINGS

FIG. 1 is a cross-sectional view schematically illustrating a high-pressure tank.
FIG. 2 is a view schematically illustrating a fiber structure.
FIG. 3 is a view schematically illustrating a manufacturing apparatus for the high-pressure tank.
FIG. 4 is a view schematically illustrating a closed forming mold.
FIG. 5 is a diagram schematically illustrating a state where hot water is supplied to a liner.
FIG. 6 is a diagram schematically illustrating a state where a thermosetting resin is injected.
FIG. 7 is a diagram schematically illustrating a method for manufacturing the high-pressure tank using an oven.

### DESCRIPTION OF EMBODIMENTS

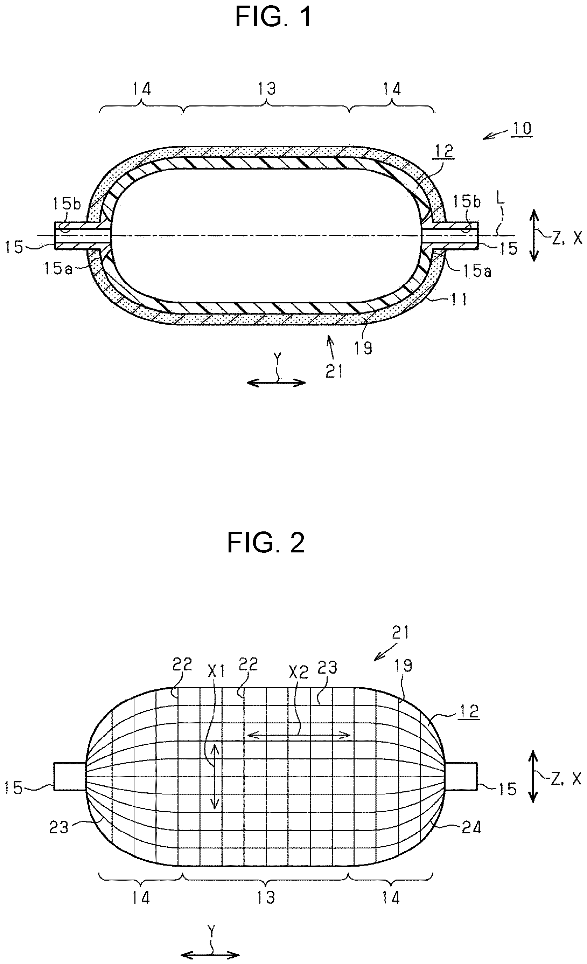

The following will describe an embodiment of a method for manufacturing a pressure container and a manufacturing apparatus for the pressure container in a method for manufacturing a high-pressure tank and a manufacturing apparatus for the high-pressure tank, with reference to the accompany figures 1 to 6.

As illustrated in FIGS. 1 and 2, a high-pressure tank 10 serving as a pressure container includes a fiber structure 21 that includes an elongated hollow liner 12 and a fiber-reinforced base material 19 externally covering the liner 12, wherein the fiber-reinforced base material 19 is impregnated and cured with a matrix resin (illustrated in dot hatching). The liner 12 is reinforced with a fiber-reinforced composite layer 11 that is formed by impregnating and curing the fiber-reinforced base material 19 with a thermosetting resin as a matrix resin so that the high-pressure tank 10 secures the pressure resistance (mechanical strength).

The liner 12 is made of resin and has an elongated hollow shape. The direction in which the central axis L of the liner 12 extends is defined as an axial direction Y. The liner 12 includes a cylindrical body portion 13. The central axis of the body portion 13 coincides with the central axis L of the liner 12. The liner 12 has dome portions 14 at opposite ends of the body portion 13 in the axial direction Y. The axial direction of each dome portion 14 coincides with the axial direction of the liner 12. Each dome portion 14 has a shape that is pinched toward the tip of each dome portion 14 along the axial direction Y of the liner 12. The direction perpendicular to the central axis L of the liner 12 is defined as a radial direction X of the liner 12.

Further, the liner 12 includes a base portion 15 at the tip of each dome portion 14. The base portion 15 is made of metal (for example, made of stainless steel). The base portion 15 includes a connecting portion 15a connected to the dome portion 14 and a hole 15b in communication with a space in the liner 12. A valve (not illustrated) is attached to the hole 15b of the base portion 15 at one end of the liner 12 in the axial direction Y, and a screw (not illustrated) is attached to and closes the hole 15b of another base portion 15 at the other end of the liner 12 in the axial direction Y. The connecting portion 15a of each base portion 15 has a curved outer surface that is a part of an outer surface of the dome portion 14.

In this embodiment, the fiber-reinforced base material 19 includes carbon fibers as reinforcing fibers. The reinforcing fibers are not limited to carbon fibers, and may use fibers generally said to high modulus fibers and/or high strength fibers, such as glass fibers, silicon carbide-based ceramic fibers, aramid fibers, and ultra-high molecular weight polyethylene fibers.

As illustrated in FIG. 2, the fiber-reinforced base material 19 includes a rolled plain fabric 24 that is woven with a plurality of warp yarns 22 and a plurality of weft yarns 23. The warp yarns 22 and the weft yarns 23 are placed perpendicular to each other. The plurality of warp yarns 22 are placed on the body portion 13 and each dome portion 14 in the axial direction Y of the liner 12 and parallel to each other. An axial direction X1 of each warp yarn 22 extends linearly in a circumferential direction Z of the liner 12 in the body portion 13 and the dome portion 14.

The plurality of weft yarns 23 are placed on the body portion 13 and each dome portion 14 in the circumferential direction Z of the liner 12 and parallel to each other. The warp yarns 22 are perpendicular to the weft yarns 23 and the axial direction X1 of each warp yarn 22 coincides with the circumferential direction Z of the liner 12, so that the liner 12 is reinforced with the warp yarns 22 in the radial direction X. Further, an axial direction X2 of each weft yarn 23 coincides with the axial direction Y of the liner 12, so that the liner 12 is reinforced with the weft yarns 23 in the axial direction Y.

Next, the manufacturing apparatus for the high-pressure tank 10 will be described.

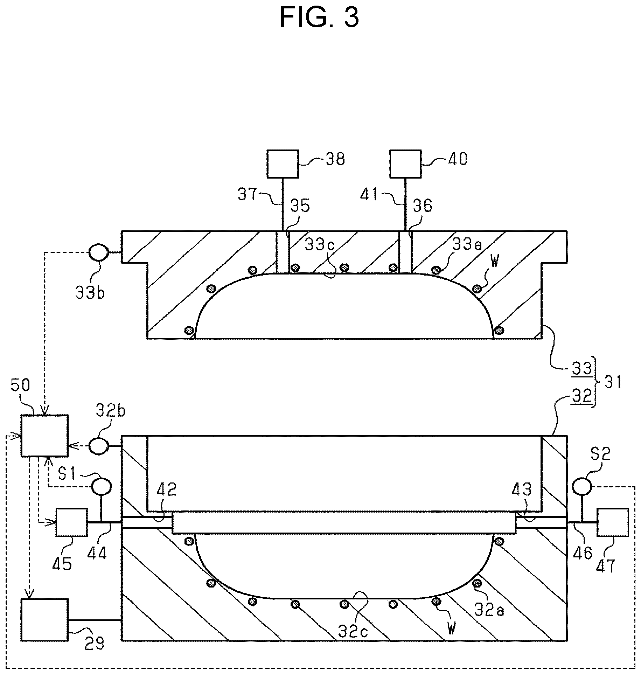

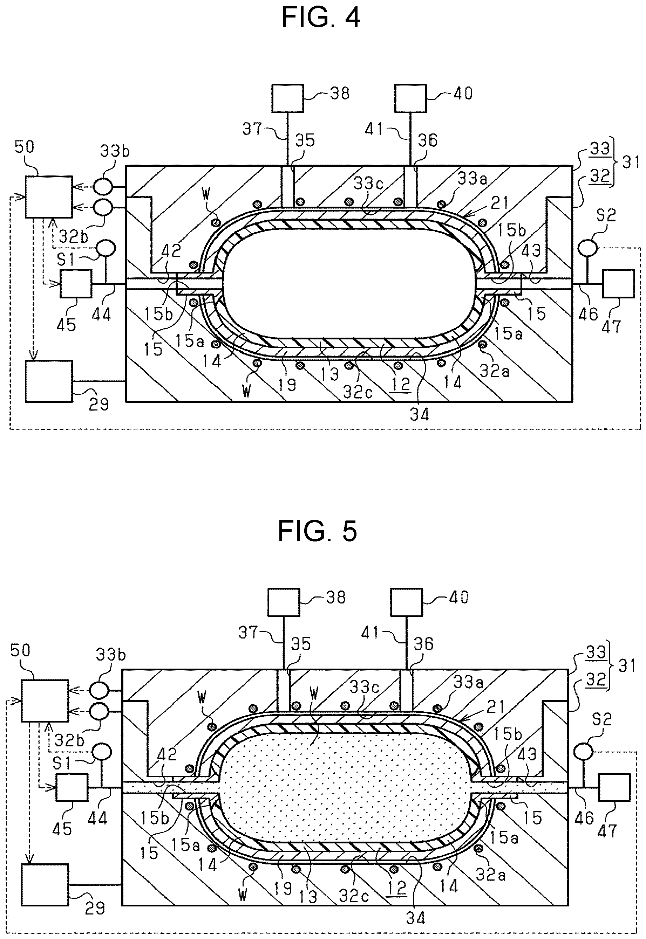

As illustrated in FIGS. 3 and 4, the manufacturing apparatus for the high-pressure tank 10 includes a forming mold 31 for manufacturing the high-pressure tank 10 in closed molding process. The forming mold 31 includes a lower mold 32 and an upper mold 33, and the forming mold 31 has a cavity 34 the shape of which corresponds to the shape of the high-pressure tank 10 in a state where the forming mold 31 is closed. The cavity 34 is formed by a lower mold recess 32c of the lower mold 32 and an upper mold recess 33c of the upper mold 33.

The lower mold 32 has a plurality of heat medium passages 32a that is formed along a surface of the lower mold recess 32c. The upper mold 33 has a plurality of heat medium passages 33a that is formed along a surface of the upper mold recess 33c. The lower mold 32 and the upper mold 33 are respectively provided with a lower mold temperature sensor 32b for measuring the temperature of the lower mold 32 and an upper mold temperature sensor 33b for measuring the temperature of the upper mold 33.

A heat medium supplier 29 supplies water (hot water) to the heat medium passages 32a, 33a, wherein the water serves as a heat medium and the temperature of which is adjusted. A hot water W supplied from the heat medium supplier 29 flows through the heat medium passages 32a, 33a so that the temperature of the lower mold 32 and the temperature of the upper mold 33 are adjusted by heat exchange with the hot water W. In this embodiment, the lower mold 32 and the upper mold 33 are heated by heat exchange with the hot water W. Then, the fiber-reinforced base material 19 of the fiber structure 21 in the cavity 34 is heated from an outer surface side of the fiber-reinforced base material 19 by the heated lower mold 32 and the upper mold 33.

The upper mold 33 has an injection hole 35 and a discharge hole 36 that are in communication with the cavity 34 in a state where the forming mold 31 is closed. One end of the injection hole 35 is located so as to communicate with the cavity 34, and the other end of the injection hole 35 is connected to a resin injection device 38 through an injection pipe 37. The resin injection device 38 adopts a known device and is configured to pump out the thermosetting resin stored in the tank toward the cavity 34. One end of the discharge hole 36 is located so as to communicate with the cavity 34, and the other end of the discharge hole 36 is connected to a vacuum pump 40 through a suction pipe 41.

Further, the lower mold 32 has an inflow passage 42 and an outflow passage 43 that are in communication with the cavity 34 in a state where the forming mold 31 is closed. The inflow passage 42 and the outflow passage 43 are formed at positions facing each other with the cavity 34 located therebetween. The inflow passage 42, the cavity 34, and the outflow passage 43 cooperate to form a connected single space. The inflow passage 42 and the outflow passage 43 are formed through the lower mold 32 so as to communicate with the lower mold recess 32c of the lower mold 32.

One end of the inflow passage 42 is located so as to communicate with the cavity 34, and the other end of the inflow passage 42 is connected to a fluid supplier 45 through a first pipe 44. The fluid supplier 45 supplies the hot water W, which serves as a fluid, to the inside of the liner 12, and adjusts the temperature of the hot water W to be supplied. The manufacturing apparatus for the high-pressure tank 10 includes a first temperature sensor S1 for measuring the temperature of the hot water W flowing through the first pipe 44.

One end of the outflow passage 43 is located so as to communicate with the cavity 34, and the other end of the outflow passage 43 is connected to a fluid discharge tank 47 through a second pipe 46. The hot water W discharged from the forming mold 31 flows into the fluid discharge tank 47 through the outflow passage 43. The manufacturing apparatus for the high-pressure tank 10 includes a second temperature sensor S2 for measuring the temperature of the hot water W flowing through the second pipe 46.

The manufacturing apparatus for the high-pressure tank 10 includes a temperature controller 50 that is connected to the lower mold temperature sensor 32b, the upper mold temperature sensor 33b, the first temperature sensor S1, and the second temperature sensor S2 via signal connection. The measured values of the lower mold temperature sensor 32b, the upper mold temperature sensor 33b, the first temperature sensor S1, and the second temperature sensor S2 are input to the temperature controller 50.

The temperature controller 50 is connected to the fluid supplier 45 and the heat medium supplier 29 via signal connection. The temperature controller 50 controls the fluid supplier 45 according to the measured values of the first temperature sensor S1 and the second temperature sensor S2 and adjusts the temperature of the hot water W that is supplied to the inside of the liner 12. Further, the temperature controller 50 controls the heat medium supplier 29 according to the measured values of the lower mold temperature sensor 32b and the upper mold temperature sensor 33b and adjusts the temperature of the hot water W supplied to the heat medium passages 32a, 33a.

Next, the method for manufacturing the high-pressure tank 10 will be described.

The method for manufacturing the high-pressure tank 10 includes a step for placing the fiber structure 21 in the cavity 34, a step for impregnating the fiber-reinforced base material 19 with a thermosetting resin, and a step for thermally curing the thermosetting resin. Further, the method for manufacturing the high-pressure tank 10 includes a step for cooling the high-pressure tank 10 that is manufactured by thermally curing the thermosetting resin, and a step for removing the high-pressure tank 10 from the cavity 34.

As illustrated in FIG. 4, the fiber structure 21 is placed in the cavity 34 (in the forming mold 31) during the placement. First, the fiber structure 21 is placed in the lower mold recess 32c of the lower mold 32, and the base portions 15 at the opposite ends in the axial direction Y are supported by the lower mold recess 32c. In this supporting, the inflow passage 42 is in communication with the hole 15b of the base portion 15 at one end of the liner 12 in the axial direction Y, and the fluid supplier 45 is connected to the hole 15b through the inflow passage 42 and the first pipe 44. Further, the outflow passage 43 is in communication with the hole 15b of the base portion 15 at the other end of the liner 12 in the axial direction Y, and the fluid discharge tank 47 is connected to the hole 15b through the outflow passage 43 and the second pipe 46.

Next, the forming mold 31 is closed until the upper mold 33 is brought into contact with the lower mold 32 to secure airtightness of the cavity 34. The fiber structure 21 is placed in the cavity 34 that is defined by the lower mold recess 32c and the upper mold recess 33c. An inner surface of the lower mold recess 32c and an inner surface of the upper mold recess 33c are located adjacent to the fiber-reinforced base material 19 of the fiber structure 21 in the cavity 34.

Before the fiber structure 21 is placed in the cavity 34, as illustrated in FIG. 5, the heat medium supplier 29 supplies the hot water W the temperature of which is adjusted by the temperature controller 50 to the heat medium passages 32a, 33a to heat (to adjust the temperature of) the lower mold 32 and the upper mold 33 by heat exchange with the hot water W flowing through the heat medium passages 32a, 33a. The temperature controller 50 adjusts the temperature of the hot water W supplied to the heat medium passages 32a, 33a so that the temperature of the lower mold 32 and the temperature of the upper mold 33 become desired temperature. In this embodiment, the temperature controller 50 adjusts the temperature of the hot water W supplied to the heat medium passages 32a, 33a so that the lower mold temperature sensor 32b that measures the temperature of the lower mold 32 and the upper mold temperature sensor 33b that measures the temperature of the upper mold 33 each read a temperature of between 80°C and 150°C.

In order to prevent deformation of the resin liner 12 due to the heating with the lower mold 32 and the upper mold 33, the temperature controller 50 adjusts the temperature of the hot water W supplied to the heat medium passages 32a, 33a so that the temperature of the lower mold 32 and the temperature of the upper mold 33 are lower than the heat resisting temperature of the liner 12. On the other hand, if the temperature of the lower mold 32 and the temperature of the upper mold 33 is too low, the thermosetting resin is cooled by the lower mold 32 and the upper mold 33, which prevents the impregnation of the fiber-reinforced base material 19 with the thermosetting resin. In order to prevent the cooling of the thermosetting resin, the temperature controller 50 adjusts the temperature of the lower mold 32 and the temperature of the upper mold 33.

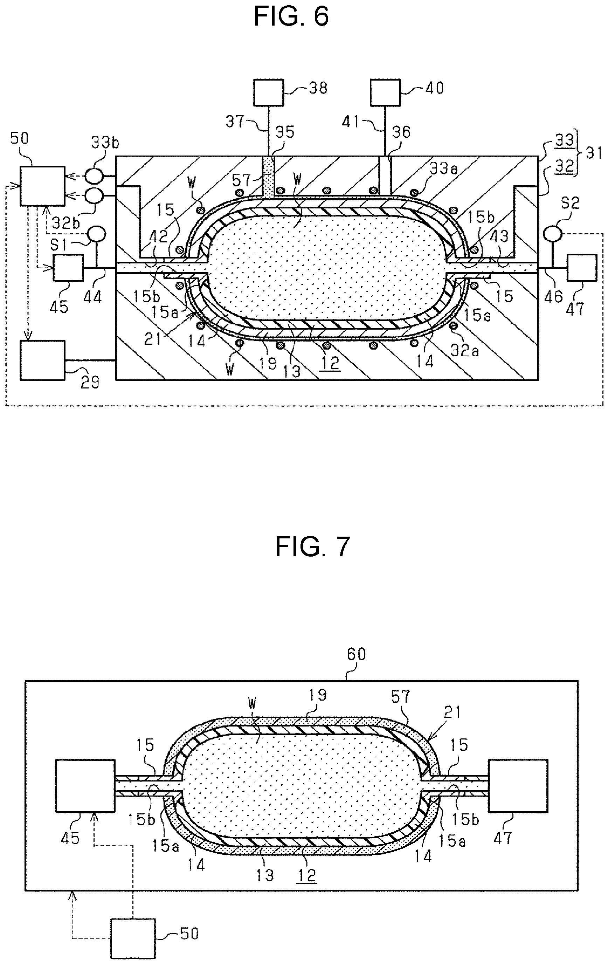

As illustrated in FIG. 6, after placing the fiber structure 21 in the cavity 34, the fluid supplier 45 supplies the hot water W to the inside of the liner 12 in the cavity 34. The hot water W is supplied to the inside of the liner 12 in order to prevent the liner 12 from expanding when the inside of the cavity 34 is depressurized in a subsequent step. At this time, the temperature controller 50 controls the fluid supplier 45 to supply the hot water W at a temperature suitable for the impregnation held in a subsequent step. Specifically, the temperature controller 50 adjusts the temperature of the hot water W, which is supplied to the inside of the liner 12, to a temperature suitable for the impregnation held in a subsequent step, according to the temperatures read by the first temperature sensor S1 and the second temperature sensor S2. The temperature controller 50 estimates the temperature of the liner 12 based on the difference between the temperature of the hot water W to be supplied to the inside of the liner 12 and the temperature of the hot water W discharged from the liner 12, and determines the temperature of the hot water W supplied to the inside of the liner 12. The temperature suitable for the impregnation is a temperature that does not cause an increase in the viscosity of the thermosetting resin due to cooling. The temperature of the hot water W at this time is between 80°C and 150°C in this embodiment.

Next, the vacuum pump 40 nearly evacuates the cavity 34 through the discharge hole 36. At this time, the hot water W supplied to the liner 12 prevents the liner 12 from expanding.

Next, as illustrated in FIG. 6, the impregnation is performed. In the impregnation step, the resin injection device 38 injects the thermosetting resin 57 into the cavity 34 through the injection hole 35 with the inside of the cavity 34 depressurized. The resin injection device 38 delivers the thermosetting resin 57 at a constant flow rate. The thermosetting resin 57 injected into the cavity 34 is filled in a gap between the fiber-reinforced base material 19 and an inner surface of the cavity 34, so that the cavity 34 is gradually filled with the thermosetting resin 57 from the bottom of the cavity 34. The injected thermosetting resin 57 pressurizes the liner 12 in the cavity 34, but the hot water W supplied to the inside of the liner 12 pressurizes the liner 12 from its inside and reduces the contraction of the liner 12.

In the impregnation step, the thermosetting resin 57 is heated by the liner 12 to which the hot water W is supplied and by the lower mold 32 and the upper mold 33 that are heated. Accordingly, the fiber-reinforced base material 19 is impregnated with the thermosetting resin 57 while the thermosetting resin 57 is heated by both of the liner 12 and the forming mold 31.

The thermosetting resin 57 is continuously injected into the cavity 34 until the whole of the fiber structure 21 in the cavity 34 is covered with the thermosetting resin 57, and then the operation of the resin injection device 38 and the vacuum pump 40 is stopped. After that, the forming mold 31 is further closed to narrow the gap between the lower mold 32 and the upper mold 33. The thermosetting resin 57 is extruded toward the fiber-reinforced base material 19 to remove a gap between the inner surface of the cavity 34 and a layer of the thermosetting resin 57.

After the injection of the thermosetting resin 57 is completed, the temperature controller 50 controls the fluid supplier 45 to supply the hot water W to the inside of the liner 12 at a temperature of the hot water W suitable for thermal curing of the thermosetting resin 57. Specifically, the temperature controller 50 estimates the temperature of the liner 12 based on the difference between the temperature of the hot water W to be supplied to the inside of the liner 12 and the temperature of the hot water W discharged from the liner 12, and determines the temperature of the hot water W supplied to the inside of the liner 12. The temperature suitable for thermal curing is a temperature that accelerates thermal curing of the thermosetting resin 57.

Further, the temperature controller 50 controls the heat medium supplier 29 to supply the hot water W to the heat medium passages 32a, 33a at a temperature of the hot water W suitable for accelerating the thermal curing of the thermosetting resin 57. Specifically, the temperature controller 50 adjusts the temperature of the hot water W to be supplied to the heat medium passages 32a, 33a according to the temperatures read by the lower mold temperature sensor 32b and the upper mold temperature sensor 33b in order to adjust the temperature of the lower mold 32 and the temperature of the upper mold 33 to accelerate the thermal curing of the thermosetting resin 57.

In order to thermally cure the thermosetting resin 57 from the inner surface side of the fiber-reinforced base material 19 before the outer surface side of the fiber-reinforced base material 19, the temperature controller 50 raises the temperature of the hot water W to be supplied to the inside of the liner 12 so that the temperature of the hot water W is higher than the heating temperatures of the lower mold 32 and the upper mold 33 to heat the thermosetting resin 57. For example, the temperature controller 50 adjusts the temperature of the hot water W supplied to the inside of the liner 12 to 100°C, and adjusts the temperature of the lower mold 32 and the temperature of the upper mold 33 to 80°C.

It is preferable that the difference between the temperature of the hot water W supplied to the inside of the liner 12 and the temperatures of the lower mold 32 and the upper mold 33 heated is between 5°C and 20°C. When the difference between the temperature of the hot water W supplied to the inside of the liner 12 and the temperatures of the lower mold 32 and the upper mold 33 is equal to or more than 5°C, the thermosetting resin 57 is thermally cured from the inner surface side of the fiber-reinforced base material 19 by the heating of the liner 12 before thermally cured from the outer surface side of the fiber-reinforced base material 19. Then, the whole of the thermosetting resin 57 in the fiber-reinforced base material 19 is thermally cured by the heating of the liner 12 and the heating of the forming mold 31. Accordingly, the thermally cured thermosetting resin 57 forms the fiber-reinforced composite layer 11, wherein an inner surface of the fiber-reinforced composite layer 11 is in contact with an outer surface of the liner 12 to reinforce the liner 12.

Then, a cooling step for cooling the high-pressure tank 10 is performed after the high-pressure tank 10 is complete. In the cooling step, the temperature controller 50 controls the fluid supplier 45 to supply the hot water W to the inside of the liner 12 at a temperature of the hot water W suitable for removing the high-pressure tank 10 from the forming mold 31. Specifically, the temperature controller 50 adjusts the temperature of the hot water W, which is supplied to the inside of the liner 12, to a temperature suitable for cooling held in the cooling step, according to the temperatures read by the first temperature sensor S1 and the second temperature sensor S2. For example, the temperature controller 50 adjusts the temperature of the hot water W, which is supplied to the inside of the liner 12, to between 30°C and 80°C. In the cooling step, the temperature controller 50 adjusts the temperature of the hot water W supplied to the inside of the liner 12 to a temperature lower than the temperatures of the lower mold 32 and the upper mold 33. In the cooling step, the temperature controller 50 does not change the temperature of the hot water W supplied to the heat medium passages 32a, 33a, so that the temperature of the lower mold 32 and the temperature of the upper mold 33 are the same as those in the impregnation step. Accordingly, the temperature of the lower mold 32 and the temperature of the upper mold 33 are between 80°C and 150°C, so that the temperature controller 50 lowers the temperature of the hot water W to be supplied to the inside of the liner 12 below 80°C in the cooling step when the temperature of the lower mold 32 and the temperature of the upper mold 33 are 80°C.

Then, the liner 12 is cooled from its inner surface, and the high-pressure tank 10 is cooled. After that, in the removal step, the forming mold 31 is opened to remove the high-pressure tank 10 from the forming mold 31.

According to the aforementioned embodiment, the following advantageous effects can be achieved.
(1) In the thermal curing step, the temperature controller 50 raises the temperature of the hot water W, which is supplied from the fluid supplier 45 to the inside of the liner 12, so that the temperature of the hot water W is higher than the heating temperatures of the lower mold 32 and the upper mold 33 to heat the thermosetting resin 57. Accordingly, the thermosetting resin 57 in the fiber-reinforced base material 19 is thermally cured from the inner surface side of the fiber-reinforced base material 19 before thermally cured from the outer surface side of the fiber-reinforced base material 19. This suppresses an inner surface of the fiber-reinforced composite layer 11 from being distorted by curing, thereby suppressing formation of a gap between the inner surface of the fiber-reinforced composite layer 11 and the outer surface of the liner 12. Accordingly, this allows the fiber-reinforced composite layer 11 to deliver reinforcing performance, so that the fiber-reinforced composite layer 11 suitably receives a load of the liner 12 when the liner 12 receives an inner pressure, and suppresses a decrease in the strength of the high-pressure tank 10. This therefore eliminates the need for an increase in the thickness of the fiber-reinforced base material 19 and/or the need for an increase in the amount of the thermosetting resin 57 to increase the strength of the high-pressure tank 10, thereby achieving a weight reduction of the high-pressure tank 10.
(2) In the impregnation step, the temperature controller 50 adjusts the temperature of the hot water W that is supplied to the inside of the liner 12 to a temperature suitable for impregnating the fiber-reinforced base material 19 with the thermosetting resin 57. This suppresses the thermosetting resin 57 from being cooled to prevent an increase in the viscosity of the thermosetting resin 57 during the impregnation of the fiber-reinforced base material 19 with the thermosetting resin 57, so that the impregnation proceeds smoothly, which leads to reduction in time required for the impregnation.
(3) In the cooling step after the thermal curing of the thermosetting resin 57, the temperature controller 50 adjusts the temperature of the hot water W supplied to the inside of the liner 12 to a temperature that allows the removal of the high-pressure tank 10 from the forming mold 31. This reduces the time required for removing the high-pressure tank 10 from the forming mold 31, for example, as compared with a case where the high-pressure tank 10 is naturally cooled. Therefore, the cooling step reduces the time required for manufacturing the high-pressure tank 10, thereby increasing the production amount of the high-pressure tank 10.
(4) In the thermal curing step, the lower mold 32 and the upper mold 33 are heated by heat exchange with the hot water W flowing through the heat medium passages 32a, 33a. The fiber-reinforced base material 19 of the fiber structure 21 in the cavity 34 is located adjacent to the inner surface of the cavity 34, so that the thermosetting resin 57 in the fiber-reinforced base material 19 easily receives the heat of the forming mold 31 and is efficiently heated from the outer surface side of the liner 12. This accelerates the thermal curing of the thermosetting resin 57 with heat from both of the liner 12 and the forming mold 31, thereby reducing the time required for the thermal curing of the thermosetting resin 57, which leads to the reduction in the manufacturing time and the increase in the production amount of the high-pressure tank 10, for example, as compared with a case where the thermosetting resin 57 is heated only by the forming mold 31.
(5) The high-pressure tank 10 is manufactured by RTM using the forming mold 31. The thermosetting resin 57 is supplied to the cavity 34 of the forming mold 31, and heated from the outer surface side by the heated forming mold 31. The thermosetting resin 57 is heated in the forming mold 31 more efficiently, for example, than heated in an oven, so that a thermosetting resin can be used as the thermosetting resin 57. This allows reduction in the time required for curing the thermosetting resin 57, thereby reducing the time required for manufacturing the high-pressure tank 10 and increasing the production amount of the high-pressure tank 10.
(6) The cavity 34 is depressurized before the thermosetting resin 57 is supplied to the cavity 34. When the thermosetting resin 57 is supplied to the cavity 34, a fluid (hot water W) is supplied to the inside of the liner 12 to prevent the liner 12 from expanding, which may be caused by a pressure change in the cavity 34. Further, when the thermosetting resin 57 is injected into the cavity 34, a fluid (hot water W) is supplied to the inside of the liner 12 to suppress the contraction of the liner 12, which may be caused by the pressurization by the injected thermosetting resin 57. The temperature controller 50 adjusts the temperature of the hot water W supplied to the inside of the liner 12 so that the time required for impregnation, thermal curing, and cooling is reduced. Therefore, the use of the hot water W supplied to the liner 12 suppresses the expansion and the contraction of the liner 12 and increases the productivity.

This embodiment can be modified and implemented as follows. This embodiment and the following modified examples can be implemented in combination with each other within a technically consistent range.
∘ The high-pressure tank 10 may be manufactured by open molding process instead of RTM which is closed molding process. For example, as illustrated in FIG. 7, the liner 12 is externally wound with reinforced fibers impregnated with a thermosetting resin by filament winding method to form the fiber-reinforced base material 19 that externally covers the liner 12. The liner 12 covered with the fiber-reinforced base material 19, i.e., the fiber structure 21, is then placed in an oven 60 that serves as a heater in the placement step.

The fluid supplier 45 and the fluid discharge tank 47 are placed in the oven 60, and the fluid supplier 45 can supply a fluid to the liner 12. In the impregnation step, the fluid supplier 45 supplies the fluid to the liner 12 placed in the oven 60. At this time, the temperature controller 50 controls the temperature of the fluid supplier 45 and the oven 60 so that the fluid supplied from the fluid supplier 45 is at a temperature suitable for the thermal curing held in the thermal curing step.

In the thermal curing step, the temperature controller 50 raises the temperature of the hot water W, which is supplied from the fluid supplier 45 to the inside of the liner 12, so that the temperature of the hot water W is higher than a heating temperature of the oven 60 to heat the thermosetting resin 57. For example, the temperature controller 50 adjusts the heating temperature of the oven 60 to between 80°C and 160°C, and raises the temperature of the hot water W supplied to the inside of the liner 12 so that the temperature of the hot water W is higher than the heating temperature of the oven 60 but between 80°C and 160°C.

Accordingly, the thermosetting resin 57 in the fiber-reinforced base material 19 is thermally cured from the inner surface side of the fiber-reinforced base material 19 before thermally cured from the outer surface side of the fiber-reinforced base material 19. This suppresses an inner surface of the fiber-reinforced composite layer 11 from being distorted by curing, thereby suppressing formation of a gap between the inner surface of the fiber-reinforced composite layer 11 and the outer surface of the liner 12. Therefore, the fiber-reinforced composite layer 11 can receive the load when the liner 12 receives the internal pressure, thereby suppressing the decrease in the strength of the high-pressure tank 10. This therefore eliminates the need for an increase in the thickness of the fiber-reinforced base material 19 and/or the need for an increase in the amount of the thermosetting resin 57 to increase the strength of the high-pressure tank 10, thereby achieving a weight reduction of the high-pressure tank 10.

The fiber-reinforced composite layer 11 is formed on the outside of the liner 12 after the thermosetting resin 57 is thermally cured, so that the high-pressure tank 10 is complete. Next, the cooling step for cooling the high-pressure tank 10 is performed. In the cooling step, the temperature controller 50 adjusts the temperature of the hot water W supplied to the inside of the liner 12 between 30°C and 80°C, for example, to allow the removal of the high-pressure tank 10 from the oven 60. This allows reduction of the time required for the removal of the high-pressure tank 10 from the oven 60, for example, as compared with a case where the high-pressure tank 10 is naturally cooled.
∘ The cooling step may be performed by natural cooling without the supply of the hot water W to the inside of the liner 12.
∘ In the cooling step, in addition to the cooling with the hot water W supplied to the inside of the liner 12, the cooling may be performed with the lower mold 32 and the upper mold 33 that are cooled by the hot water W the temperature of which is controlled and which flows through the heat medium passages 32a and 33a.
∘ In the impregnation step, the supply of the hot water W to the inside of the liner 12 is not necessarily required, and the impregnation of the thermosetting resin 57 may be accelerated only by the heating with the lower mold 32 and the upper mold 33.
∘ In the impregnation step, the heating of the thermosetting resin 57 with the lower mold 32 and the upper mold 33 is not necessary required, and the impregnation of the thermosetting resin 57 may be accelerated only by the heating, from the inner surface side of the fiber-reinforced base material 19, with the hot water W supplied to the inside of the liner 12.
∘ The fluid supplied from the fluid supplier 45 to the liner 12 may be steam, oil, or an incompressible fluid. Further, the fluid supplied from the heat medium supplier 29 to the heat medium passages 32a of the lower mold 32 and the heat medium passages 33a of the upper mold 33 may be steam, oil, or an incompressible fluid.
∘ The lower mold 32 and the upper mold 33 may be heated by a method other than heating with a fluid. For example, the lower mold 32 and the upper mold 33 may be heated by a heater disposed outside of the lower mold 32 and the upper mold 33, or heated by a hot air blower as a heater.
∘ When the liner 12 is made of a resin material that is easily softened by heat, the liner 12 may be softened due to the heat generated by the thermal curing of the thermosetting resin 57. In this case, before the liner 12 is softened, the temperature of the fluid supplied to the liner 12 may be lowered (to between 30°C and 80°C, for example) to cool the liner 12.
∘ The temperature of the fluid supplied to the liner 12 is adjusted according to the measurement values read by the first temperature sensor S1 and the second temperature sensor S2, but the temperature may be adjusted to a temperature stored in advance in the temperature controller 50.
∘ Although the temperature controller 50 adjusts the temperature of the hot water W supplied from the heat medium supplier 29 and the fluid supplier 45, each of the heat medium supplier 29 and the fluid supplier 45 may have a temperature controller. In this case, the temperature controller of the heat medium supplier 29 adjusts the temperature of the hot water W supplied to the heat medium passages 32a, 33a, and the temperature controller of the fluid supplier 45 adjusts the temperature of the hot water W supplied to the inside of the liner 12.
∘ The liner 12 is externally wound with reinforced fibers by, for example, filament winding method or braiding method to form the fiber-reinforced base material 19 of the fiber structure 21 without impregnation with a thermosetting resin, and the fiber structure 21 is then impregnated with the thermosetting resin 57 by RTM and cured to form the high-pressure tank 10.
∘ The high-pressure tank 10 is not limited to the one used as a hydrogen source that is mounted to a fuel cell electric vehicle, but may be, for example, a hydrogen source for a hydrogen engine, a heat pump, or the like. Further, the high-pressure tank 10 may be used as a hydrogen source for a fuel cell of a household power source.
∘ The pressure container is not limited to a high-pressure tank that stores hydrogen, but may be a pressure container that stores other gases, such as nitrogen and compressed natural gas.
∘The material of the liner 12 is not limited to the resin material, but may be a metal material.

### Reference Signs List

- W: hot water as a fluid
- 10: high-pressure tank as a pressure container
- 11: fiber-reinforced composite layer
- 12: liner
- 19: fiber-reinforced base material
- 31: forming mold as a heater
- 34: cavity
- 42: inflow passage
- 45: fluid supplier
- 50: temperature controller
- 57: thermosetting resin
- 60: oven as a heater

## Claims

1. A method for manufacturing a pressure container, the method comprising:
thermally curing a thermosetting resin with which a fiber-reinforced base material made from reinforced fibers is impregnated to form a fiber-reinforced composite layer that externally covers a liner, **characterized in that**
the thermally curing step for thermally curing the thermosetting resin with which the fiber-reinforced base material is impregnated includes thermally curing the thermosetting resin by heat exchange with a fluid supplied to an inside of the liner; and thermally curing the thermosetting resin by heating from an outer surface side of the fiber-reinforced base material, and
a temperature of the fluid supplied to the inside of the liner is higher than a temperature of the heating from the outer surface side of the fiber-reinforced base material.

2. The method for manufacturing the pressure container according to claim 1, wherein the method includes placing the liner covered with the fiber-reinforced base material in a cavity of a forming mold, and the heating from the outer surface side of the fiber-reinforced base material is heating with the forming mold.

3. The method for manufacturing the pressure container according to claim 2, wherein the method includes impregnating the fiber-reinforced base material with the thermosetting resin that is supplied to the cavity before the thermally curing step, and
in the impregnation step, the thermosetting resin is heated by heat exchange with the fluid supplied to the inside of the liner.

4. The method for manufacturing the pressure container according to claim 2 or 3, wherein the method includes cooling the pressure container that is manufactured by thermally curing the thermosetting resin, and
in the cooling step, the temperature of the fluid supplied to the inside of the liner is adjusted to a temperature lower than a temperature of the forming mold.

5. A manufacturing apparatus for manufacturing a pressure container, the pressure container including a liner externally covered with a fiber-reinforced composite layer that is formed by thermally curing a thermosetting resin with which a fiber-reinforced base material made from reinforced fibers is impregnated, **characterized in that** the manufacturing apparatus comprises:
a fluid supplier configured to supply a fluid to an inside of the liner;
a heater configured to heat the thermosetting resin from an outer surface side of the fiber-reinforced base material; and
a temperature controller configured to adjust a temperature of the fluid supplied to the inside of the liner to a temperature higher than a heating temperature of the heater when the thermosetting resin with which the fiber-reinforced base material is impregnated is thermally cured.

6. The manufacturing apparatus for manufacturing the pressure container according to claim 5, wherein
the manufacturing apparatus includes a forming mold that has a cavity in which the liner covered with the fiber-reinforced base material is placed, wherein the forming mold serves as the heater and has an inflow passage through which the fluid supplier communicates with the cavity, and
the temperature controller adjusts the temperature of the fluid supplied to the inside of the liner to a temperature for heating the thermosetting resin when the fiber-reinforced base material is impregnated with the thermosetting resin supplied to the cavity before the thermally curing.

7. The manufacturing apparatus for manufacturing the pressure container according to claim 6, wherein the temperature controller adjusts the temperature of the fluid supplied to the inside of the liner to a temperature lower than a temperature of the forming mold before the pressure container manufactured by thermally curing the thermosetting resin is removed from the forming mold.

## Amended claims

### Amended claims under Art. 19.1 PCT

1. [Amended] A method for manufacturing a pressure container, the method comprising:
thermally curing a thermosetting resin with which a fiber-reinforced base material made from reinforced fibers is impregnated to form a fiber-reinforced composite layer that externally covers a liner, **characterized in that**
the thermally curing step for thermally curing the thermosetting resin with which the fiber-reinforced base material is impregnated includes thermally curing the thermosetting resin by heat exchange with a fluid supplied to an inside of the liner; and thermally curing the thermosetting resin by heating from an outer surface side of the fiber-reinforced base material, and
a temperature of the fluid supplied to the inside of the liner is higher than a temperature of the heating from the outer surface side of the fiber-reinforced base material so that the thermosetting resin is thermally cured from an inner surface side of the fiber-reinforced base material adjacent to the liner before the outer surface side of the fiber-reinforced base material.

2. The method for manufacturing the pressure container according to claim 1, wherein the method includes placing the liner covered with the fiber-reinforced base material in a cavity of a forming mold, and the heating from the outer surface side of the fiber-reinforced base material is heating with the forming mold.

3. The method for manufacturing the pressure container according to claim 2, wherein the method includes impregnating the fiber-reinforced base material with the thermosetting resin that is supplied to the cavity before the thermally curing step, and
in the impregnation step, the thermosetting resin is heated by heat exchange with the fluid supplied to the inside of the liner.

4. The method for manufacturing the pressure container according to claim 2 or 3, wherein the method includes cooling the pressure container that is manufactured by thermally curing the thermosetting resin, and
in the cooling step, the temperature of the fluid supplied to the inside of the liner is adjusted to a temperature lower than a temperature of the forming mold.

5. A manufacturing apparatus for manufacturing a pressure container, the pressure container including a liner externally covered with a fiber-reinforced composite layer that is formed by thermally curing a thermosetting resin with which a fiber-reinforced base material made from reinforced fibers is impregnated, **characterized in that** the manufacturing apparatus comprises:
a fluid supplier configured to supply a fluid to an inside of the liner;
a heater configured to heat the thermosetting resin from an outer surface side of the fiber-reinforced base material; and
a temperature controller configured to adjust a temperature of the fluid supplied to the inside of the liner to a temperature higher than a heating temperature of the heater when the thermosetting resin with which the fiber-reinforced base material is impregnated is thermally cured.

6. The manufacturing apparatus for manufacturing the pressure container according to claim 5, wherein
the manufacturing apparatus includes a forming mold that has a cavity in which the liner covered with the fiber-reinforced base material is placed, wherein the forming mold serves as the heater and has an inflow passage through which the fluid supplier communicates with the cavity, and
the temperature controller adjusts the temperature of the fluid supplied to the inside of the liner to a temperature for heating the thermosetting resin when the fiber-reinforced base material is impregnated with the thermosetting resin supplied to the cavity before the thermally curing.

7. The manufacturing apparatus for manufacturing the pressure container according to claim 6, wherein the temperature controller adjusts the temperature of the fluid supplied to the inside of the liner to a temperature lower than a temperature of the forming mold before the pressure container manufactured by thermally curing the thermosetting resin is removed from the forming mold.
